**Europäisches Patentamt**

**European Patent Office**

**Office européen des brevets**

(19)

(11) **EP 1 255 365 A2**

(12) **EUROPÄISCHE PATENTANMELDUNG**

(43) Veröffentlichungstag:
06.11.2002 Patentblatt 2002/45

(51) Int Cl.⁷: $H04B\ 10/08$, $H04B\ 10/148$

(21) Anmeldenummer: 02017938.8

(22) Anmeldetag: 04.10.1999

(84) Benannte Vertragsstaaten:
**AT BE CH CY DE DK ES FI FR GB GR IE IT LI LU MC NL PT SE**

(30) Priorität: **05.10.1998 DE 19845701**

(62) Dokumentnummer(n) der früheren Anmeldung(en) nach Art. 76 EPÜ:
**99950610.8 / 1 135 707**

(71) Anmelder: **Profile Optische Systeme GmbH**
**85757 Karlsfeld (DE)**

(72) Erfinder:
• **Bandemer, Adelbert**
**85221 Dachau (DE)**

• **Palme, Dieter**
**80993 München (DE)**

(74) Vertreter: **Schurack, Eduard F. et al**
**Hofstetter, Schurack & Skora**
**Balanstrasse 57**
**81541 München (DE)**

Bemerkungen:
This application was filed on 09 - 08 - 2002 as a divisional application to the application mentioned under INID code 62.

(54) **Anordnung und Verfahren zur Überwachung der Performance von DWDM Mehrwellenlängensystemen**

(57) Die Erfindung betrifft eine Anordnung und ein Verfahren zur Überwachung aller charakteristischen Parameter eines DWDM- Übertragungssystems.

Hierbei mischt ein optoelektronischer Kreuzkorrelator 2 das Meßlicht mit einem in der Frequenz abstimmbaren Referenzlicht auf ein elektrisches Niederfrequenzsignal, welches hochohmig ausgewertet wird.

Fig. 1

EP 1 255 365 A2

**Beschreibung**

Bei dichtgepackten WDM-Systemen (dense WDM, DWDM) werden Nachrichten über Lichtsignale bei verschiedenen Wellenlängen über nur eine Faser übertragen. Jede Wellenlänge ist Träger eines Informationssignals. Dabei liegen alle Kanäle innerhalb des Wellenslängenbereichs von zur Zeit ca. 1520 nm bis 1565 nm. Der Kanalabstand beträgt wenige Nanometer bzw. einige hundert Picometer. Von der internationalen ITU-T Arbeitsgruppe wurden dabei zur Standardisierung dieser Telekommunikationssysteme die zu verwendenden Wellenlängen (entspricht den Kanälen) mit einem Kanalabstand von 100 GHz ($\approx$ 0.8 nm) als Standard empfohlen. Die weitere Entwicklung dieser DWDM-Systeme zielt auf die Erweiterung des nutzbaren Wellenlängenbereiches bis z.B. 1610 nm.

An vielen Stellen dieses Übertragungssystems werden Anordnungen zur laufenden Überwachung aller charakteristischer Parameter mit der Möglichkeit der Signalregeneration oder - verbesserung benötigt. Zu den wichtigsten Parametern gehören dabei die Wellenlänge und die Leistung aller Kanäle, die Überwachung der Linienbreite und der Wellenlängendrift der Laser, sowie das Signal-Rausch-Verhältnis in jedem Übertragungskanal. Typische Spezifikationsanforderungen für die Überwachung sind dabei:

- Wellenlängenmessung pro Kanal mit 0.08 nm absoluter Genauigkeit und 0.01 nm Auflösung
- Leistungsmessung pro Kanal mit 0.5 dB absoluter Genauigkeit und 0.1 dB Auflösung
- S/N-Messung zwischen den Kanälen mit 0.4 dB absoluter Genauigkeit, 0.1 dB Wiederholbarkeit und einer Dynamik von mindestens 33 dB
- Zuverlässigkeit über $10^{10}$ Meßzyklen (ca. 20 Jahre)
- geringe PDL (0.1 dB max)
- geringe Baugröße Zur Überwachung eignen sich grundsätzlich verschiedene Verfahren, die in konventionellen optischen Spektrumanalysatoren zur Anwendung kommen.

Bei der Filtertechnik werden zur Wellenlängenselektion durchstimmbare, schmalbandige Filter verwendet. Es kommen akustooptische Filter (z.B. Fa. Wandel & Goltermann) oder piezoelektrisch gesteuerte Mikrofilter (z.B. Fa. Queensgate) oder durchstimmbare Faser-Bragg-Gitter (z.B. Fa. ElectroPhotonics Corp.) zum Einsatz, die direkt über eine elektrische Größe abstimmbar sind.

Die Filtertechnik beschränkt sich nicht nur auf die optische Filterung, sondern sie kann auch nach einer vorausgehenden Umsetzung in elektronische Signale auf der elektrischen Signalebene erfolgen. Bei der elektronischen Filterung wird das optische Signal in einem nichtlinearen optischen Bauelement mit einem optischen Referenzsignal gemischt und die Differenzfrequenz auf einem elektronischen Spektrenanalyser ausgewertet (Fa. Hewlett Packard).

Eine weitere Variante ist die Gittermonochromatortechnik, bei der entweder das Gitter gedreht und das räumlich aufgelöste Signalspektrum mit einer einzelnen Photodiode abgetastet wird oder das Gitter feststeht und ein scannender Ablenkspiegel vor dem Ausgangsspalt des Monochromators vorgesehen ist bzw. ein bewegliches Reflexionselement den Einfallswinkel der Strahlung auf das Gitter ändert (z.B. Fa. Photonetics), oder es wird ein feststehendes Gitter zusammen mit einer Photodiodenzeile als Detektoreinheit (z.B. Fa. Yokogawa) verwendet.

Bei der Interferometertechnik wird aus dem Detektorsignal eines Michelson-Interferometers mit variablen Weglängen mit Hilfe der Fouriertransformation das Spektrum gewonnen (z. B. Fa. Hewlett Packard).

Alle erwähnten, konventionellen Anordnungen sind nicht geeignet, die hohen Anforderungen, die bezüglich Auflösung, Meßgenauigkeit, ASE-Messung und Dynamik an eine Monitoring-Baugruppe für ein DWDM-System gestellt werden, gleichzeitig und in geeigneter Weise zu erfüllen und außerdem den Forderungen nach kurzer Meßzeit, Langlebigkeit und geringem Platzbedarf sowie kostengünstiger Ausführung zu entsprechen. Aufgabe der Erfindung ist es, ein geeignetes Meßsystem zu realisieren, welches bezüglich Auflösung, Meßgenauigkeit, ASE-Messung und Dynamik, kurzer Meßzeit, Langlebigkeit und geringem Platzbedarf sowie kostengünstiger Ausführung den Anforderungen an ein DWDM-Monitorsystem genügt.

Erfindungsgemäß wird dies mittels eines optoelektronischen Kreuzkorrelators gelöst, welcher unter Bezugnahme auf die beigefügten Zeichnungen als eine rein elektronische Lösung vorgestellt wird. Es zeigen:

Fig .1     das Prinzip eines optoelektronischen Kreuzkorrelators;
Fig. 2     ein Beispiel eines optoelektronischen Kreuzkorrelators;
Fig. 3     die Strahlzusammenführung durch Fiber-Koppler; und
Fig. 4     einen zweikanaligen optoelektronischen Kreuzkorrelator.

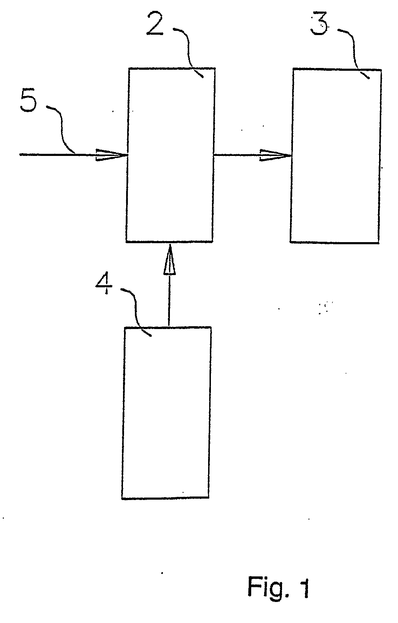

Fig.1 zeigt eine vollständige elektronische Lösung in Form eines optoelektronischen Kreuzkorrelators 2. Hier werden zwei optische Signale miteinander gemischt, ohne vorher eine Umsetzung in elektrische Signale vorzunehmen. Diese beiden Signale sind einmal das zu untersuchende Meßlicht 5 und andererseits das aus einem durchstimmbaren Laser 4 stammende Referenzlicht. Beim Durchstimmen des Referenzoszillators (Laser) entsteht eine Schwebungsfrequenz, die bei Annäherung an die Meßlichtfrequenz immer niederfrequenter wird und bei Frequenzgleichheit gegen Null geht. Dies ermöglicht die Verwendung von für den Niederfrequenzbereich vorgesehenen Bauelementen und somit auch für den Mischerausgang einen hochohmigen Lastwiderstand. Diese führt zu einer erheblichen Verbesserung der Nachweisempfindlichkeit. Während die von der optischen Überlagerungstechnik her bekannten Lösung überlicherweise mit einem Lastwiderstand von 50 Ohm arbeiten, läßt diese Anordnung Widerstände von einigen Kiloohm zu. Der zu verarbeitende Frequenzbereich erstreckt sich dabei von einer frei zu wählenden unteren Grenzfrequenz, die zweckmäßigerweise oberhalb störender Niederfrequenzund Basisbandkomponenten, die durch die Intensitätsmodulation der optischen Träger verusacht werden, liegt, bis zu einer oberen Grenzfrequenz, die die Integrationsbandbreite bestimmt. Diese Frequenz ist zweckmäßigerweise nicht wesentlich niedriger als die spektrale Breite des als Überlagerungsoszillator fungierenden durchstimmbaren Lasers. Der Vorteil einer solchen Anordnung besteht in der kompakten Ausführung, dem Fehlen beweglicher Teile, einer rein elektronischen Lösung unter Verwendung für den NF-Bereich geeigneter Bauelemente, der nur durch die Abstimmgeschwindigkeit des Referenzoszillators begrenzten Meßrate und einer hohen Empfindlichkeit bei fast beliebig kleiner Auswertebandbreite.

Die beiden Lichtsignale werden durch die folgenden Beziehungen beschrieben:

$$\mathbf{E}_M = E_M \left[ i \int_0^t \omega\ t\ dt \right] e_M$$

$$\mathbf{E}_R = E_R \left[ i \int_0^t \Omega\ t\ dt \right] e_R$$

Daraus ergibt sich der Photostrom:

$$I = | \mathbf{E}_M + \mathbf{E}_R |^2$$

$$= \mathbf{E}_M^{*}\, \mathbf{E}_M + \mathbf{E}_R^{*}\, \mathbf{E}_R + 2\,\mathrm{Re}\, \{\, \mathbf{E}_M^{*}\, \mathbf{E}_R \,\}$$

$$= E_M^2 + E_R^2 + 2\, E_M\, E_R \cos \left[ \int_0^t (\omega - \Omega) t\ dt \right]$$

Es ist erkennbar, daß der letzte Term einen zeitlich veränderlichen Strom beschreibt, der von den Amplituden beider Strahlungen und der Differenz der Lichtfrequenzen abhängt. Bei Annäherung beider Frequenzen entsteht ein niederfrequentes Signal mit der Maximalamplitude $I_{max} = 2\, E_M\, E_R$.

Außerdem geht die Polarisationsrichtung beider Lichtquellen ein. Um diese Abhängigkeit auszuschalten, kann einerseits der Referenzlichtlaser oder die Meßlichtquelle in seiner Polarisationsrichtung statistisch veränderlich gemacht werden, oder es werden z.B. als Referenzlichtquelle zwei orthogonal polarisierte Strahlen zur Verfügung gestellt und die optische Mischung erfolgt in zwei getrennten Detektoren mit nachträglicher Verknüpfung in dem Signalprozessor. Als weitere Lösung kann z.B. der Referenzlaser zeitsequentiell in der Polarisationsenbene umgeschaltet werden und die nacheinander folgenden Messungen werden in dem Signalprozessor miteinander verknüpft.

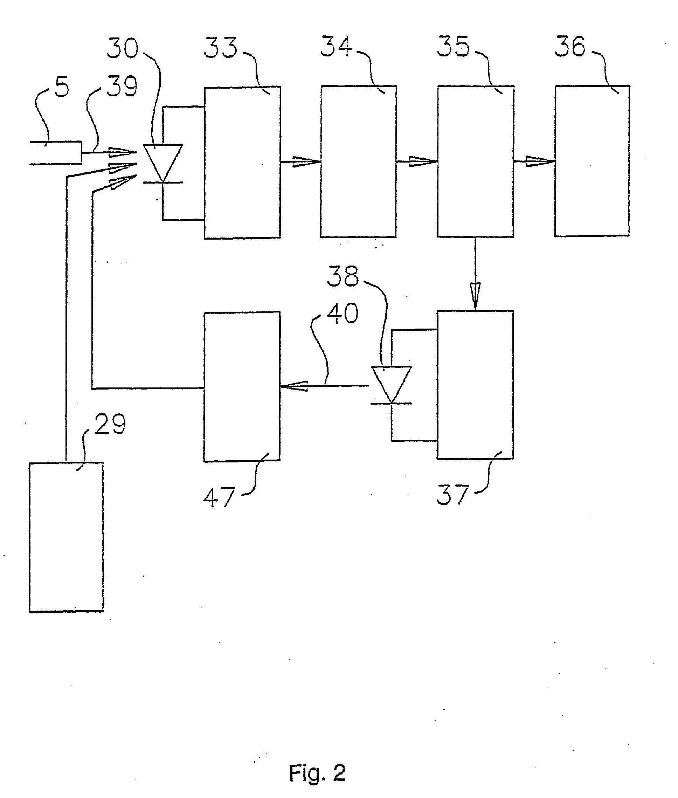

In Fig. 2 wird eine Variante beispielhaft dargestellt. Die zu messende Strahlung gelangt über den Fasereingang 5 als Meßstrahles 39 auf ein nichtlineares optisches Bauelement, den Detektor 32. Gleichzeitig wird der Referenzstrahl 40 über die Polarisationseinheit 47 zum Detektor 32 geführt. Die aus den optischen Signalen entstehenden elektrischen Mischprodukte gelangen über das Tiefpassfilter 33 zum Gleichrichter 34 und weiter zum digitalen Signalprozessor 35, der die Auswertung der Signale vornimmt, die Anzeigeeinheit 36 ansteuert und den Referenzlaser-Controler 37 mit dem abstimmbaren Laser 38 bedient.

Durch eine Wellenkalibrierung 29 der Wellenlängenzuordnung in beiden Varianten wird die Bereitstellung von Wellenlängenreferenzen ermöglicht. Dazu eignen sich bekannte Anordnungen wie z.B. Absorptionszellen, die Gase mit charakteristischen Absorptionslinien im erforderlichen Wellenlängenbereich enthalten. Wird eine solche Zelle in den Strahlengang z. B. des Spektrometers gebracht und das System breitbandig beleuchtet, so entstehen charakteristische Signalverläufe, mit denen eine genaue Wellenlängenzuordnung möglich ist. Eine andere Möglichkeit besteht in der Messung der Referenzlaserwellenlänge durch eine zusätzliche interferometrische Anordnung. Hierbei wird z. B. ein Teil des Lichtes des durchstimmbaren Referenzlichtlasers zu einem Interferometer geführt, welches zusätzlich mit einer hochgenauen Lichtquelle versehen ist und in dem die beim Durchstimmen des Referenzlichtlasers entstehenden zeitlich veränderlichen Interferenzsignale der Zuordnung der momentan vorhandenen Wellenlänge dienen.

Die Zusammenführung von Meß- und Referenzlicht kann auf unterschiedliche Weise realisiert werden. In Fig. 2 ist die freie Einstrahlung von Meß-, Referenzund gegebenenfalls Kalibrierlicht auf das nichtlineare Detektorbauelement 32 dargestellt.

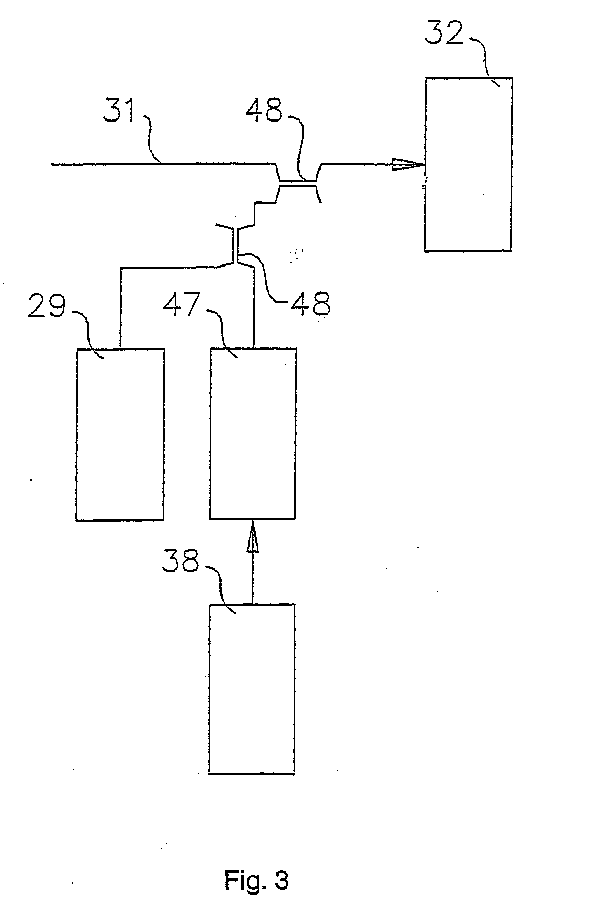

In Fig. 3 ist dargestellt, dass die Zusammenführung der verschiedenen Strahlen durch ein faseroptisches Bauelement, welches als Bulk- oder Y-Koppler 48 ausgeführt ist, erfolgt. Das Meßsignal am Fasereingang 31 gelangt über den Koppler 48 zum Detektor 32. Das Licht des Referenzlasers 38 wird über die Polarisationseinheit 47 in einem weiteren Koppler 48 mit dem Licht der Wellenlängenkalibrierung 29 kombiniert und im ersten Koppler 48 zum Meßlicht hinzugefügt.

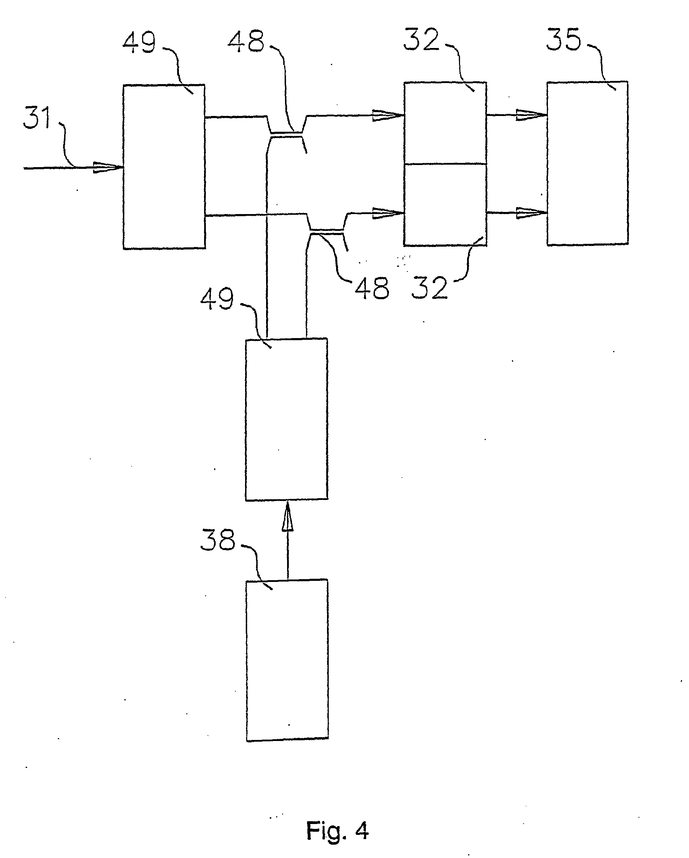

In Fig. 4 ist beispielhaft eine zweikanalige Ausführung angegeben, die die angeführte Polarisationsabhängigkeit zu berücksichtigen gestattet. Das Meßlicht wird durch einen polarisierenden Strahlteiler 49 in zwei Kanäle orthogonaler Polarisation geteilt. Der Referenzlaser 38 wird ebenfalls in zwei Strahlen orthogonaler Polarisation aufgespalten und mit den zugehörigen Meßstrahlen auf zwei getrennte Detektoren 46 geführt. Die Ausgangssignale beider Detektoren gelangen dann zum Signalprozessor 35 und werden dort weiterverarbeitet.

**Legende zu den Fig.**

| | |
|---|---|
| 2 | Optoelektronischer Kreuzkorrelator |
| 3 | Auswerteeinheit |
| 4 | Referenzoszillator, Laser, Referenzlaser |
| 5 | Eingangssignal, Lichtleitfaser, Fasereingang |
| 29 | Wellenlängenkalibrierung |
| 30 | Nichtlineares optoelektronisches Bauelement |
| 31 | Fasereingang |
| 32 | Detektor, nichtlineares Detektorbauelement, Photodiode |
| 33 | Tiefpaßfilter |
| 34 | Gleichrichter |
| 35 | Signalprozessor |
| 36 | Anzeigeeinheit |
| 37 | Referenzlaser-Controler |
| 38 | Abstimmbarer Laser, Referenzlaser |
| 39 | Meßstrahl |
| 40 | Referenzstrahl |
| 47 | Polarisationseinheit |
| 48 | Bulk- oder Y- Faserkoppler |
| 49 | Polarisierender Strahlteiler |

**Patentansprüche**

**1.** Anordnung zur Überwachung der Performance von DWDM-Mehrwellenlängen-Systemen,
**dadurch gekennzeichnet,**
**daß** sie einen optoelektronischen Kreuzkorrelator (2) aufweist zur optoelektronischen Mischung zweier optischer Signale ohne diese vorher in elektrische Signale umzusetzen.

**2.** Anordnung nach Anspruch 1,
**dadurch gekennzeichnet,**
**daß** zur optoelektronischen Mischung zweier optischer Signale zur Gewinnung des Meßsignals ein nichtlineares optoelektronisches Bauelement (30) angeordnet ist.

3. Anordnung nach Anspruch 1 oder 2,
   **dadurch gekennzeichnet,**
   **daß** das nichtlineare optoelektronische Bauelement eine Photodiode (32) ist.

4. Anordnung nach einem der vorhergehenden Ansprüche,
   **dadurch gekennzeichnet,**
   **daß** die Photodiode (32) zur direkten Einstrahlung beider Lichtquellen (39, 40) auf sie zur Zusammenführung der optischen Signale eingerichtet ist.

5. Anordnung nach einem der Ansprüche 1 bis 3,
   **gekennzeichnet durch**
   einen Bulk- oder faseroptischen Y-Koppler (48) zur Zusammenführung der optischen Signale.

6. Anordnung nach einem der vorhergehenden Ansprüche,
   **dadurch gekennzeichnet,**
   **daß** das elektronische Mischsignal im NF-Frequenzband liegt.

7. Anordnung nach einem der vorhergehenden Ansprüche,
   **gekennzeichnet durch**
   einen Signalprozessor (35) zur Weiterverarbeitung, Gleichrichtung und weiteren Auswertung des NF-Nutzsignals.

8. Anordnung nach einem der vorhergehenden Ansprüche,
   **gekennzeichnet durch**
   einen durchstimmbaren Laser (38) zur Erzeugung einer Referenzstrahlung.

9. Anordnung nach einem der vorhergehenden Ansprüche,
   **dadurch gekennzeichnet,**
   **daß** der durchstimmbare Laser (38) ein Diodenlaser oder ein Faserlaser ist.

10. Anordnung nach einem der vorhergehenden Ansprüche,
    **gekennzeichnet durch**
    einen in Schritten umschaltbaren und innerhalb jeden Teilbereichs fein durchstimmbaren Laser (38) zur Erzeugung der Referenzstrahlung.

11. Verfahren zur Überwachung der Performance von DWDM-Mehrwellenlängen-Systemen,
    **dadurch gekennzeichnet,**
    **daß** man eine Anordnung nach einem der Ansprüche 1 bis 10 verwendet.

Fig. 1

Fig. 2

Fig. 3

Fig. 4